# EUROPÄISCHE PATENTSCHRIFT

(11) **EP 3 144 572 B1**
(45) Veröffentlichungstag und Bekanntmachung des Hinweises auf die Patenterteilung: **26.12.2018**
(21) Anmeldenummer: 16177164.7
(22) Anmeldetag: 30.06.2016
(51) Int. Cl.: F16K 41/04

(54) **FÜHRUNGSVORRICHTUNG FÜR EINE VENTILSPINDEL UND VENTIL MIT DER FÜHRUNGSVORRICHTUNG**
GUIDING DEVICE FOR A VALVE STEM AND VALVE WITH THE GUIDING DEVICE
DISPOSITIF DE GUIDAGE POUR UNE TIGE DE SOUPAPE ET SOUPAPE COMPRENANT LEDIT DISPOSITIF DE GUIDAGE

(30) Priorität: 16.09.2015 DE 102015217752
(43) Veröffentlichungstag der Anmeldung: 22.03.2017
(73) Patentinhaber: Siemens Aktiengesellschaft, 80333 München (DE)
(72) Erfinder: Brüchert, Iven, 02829 Schöpstal OT Kunnersdorf (DE)

(56) Entgegenhaltungen:
- EP-A1- 0 308 390
- WO-A1-2007/021619
- US-A- 788 939

## Beschreibung

Die vorliegende Erfindung betrifft eine Vorrichtung zum Führen einer Ventilspindel und ein Ventil, welches die Vorrichtung zum Führen der Ventilspindel umfasst.
Bei Schnellschluss- und Regelventilen an Dampfturbinen wird eine bewegliche Ventilspindel zu einer Führung und/oder einem Gehäuse hin mittels Graphitpackungsringen (Stopfbuchspackung) abgedichtet. Zur Erzielung der notwendigen Abdichtung müssen diese Packungen im eingebauten Zustand verspannt werden. Dabei tritt häufig ein Problem bezüglich der Umsetzung der Einbringung und Einhaltung von definierten Vorspannkräften auf. Bei Nichteinhalten der Vorgabewerte können verschiedene Probleme auftreten.
Bei zu geringer Vorspannung der Graphitpackungsringe bzw. Stopfbuchspackungen kann es zu Undichtigkeiten und somit zu einem unkontrollierten Dampfaustritt kommen. Als Folge kann ein Nachspannen der Packung notwendig sein oder ein Stillsitzen der Dampfturbine kann erforderlich sein. Ferner kann es zu einer möglichen Beschädigung von Komponente oder gar zu einer Gefährdung von Menschen kommen.
Bei einer zu hohen Verspannung der Graphitpackungsringe bzw. Stopfbuchspackungen kann es zu einer überhöhten Reibung zwischen der Packung und der Ventilspindel (bis hin zum Verklemmen) kommen. Als Folge kann aufgrund möglicherweise zu geringer aufbringbarer Stellkräfte der Ventilantriebe die ordnungsgemäße Regelung der Dampfturbine nicht mehr möglich sein. Eventuell muss die Dampfturbine stillgesetzt werden. Ferner ist eine Gefährdung von Menschen möglich.
EP 0 308 390 A1 offenbart eine Ventilspindelpackung für ein Fluidventil zur Benutzung bei erhöhtem Druck und Temperatur. Die Ventilspindel wird von einer Packung sowie einem Later-nenring und einem der Packung folgenden Element innerhalb eines Gehäuses geführt, wobei Packungsschrauben über ein Gewinde an Packungsstiften montiert sind, um so die Last bzw. die Beladung auf der Packung einzustellen.

Im Stand der Technik werden Stopfbuchspackungen mittels einschraubbaren/nachstellbaren Stopfbuchsbrillen verspannt. Ein kontinuierliches Vorspannen nach Vorgabewerten ist jedoch nicht in allen Fällen möglich, da der Einfluss der Gewindereibung bei einem eingebrachten Drehmoment nicht genau bekannt ist und somit Vorspannkräfte in unkontrollierter Weise mit beeinflusst. Durch Veränderungen in der Materialoberfläche der Gewindepaarung beim Betrieb der Dampfturbinenanlage (beispielsweise aufgrund eines Wärmeeinflusses) kann keine zuverlässige Aussage über den Anteil des Reibmomentes und die eingetragene Axialkraft getroffen werden. Als Folge kann die reale Verspannung der Stopfbuchspackung unbekannt sein. Daher kann es zu unerwünschten Undichtigkeiten oder zu einer Unmöglichkeit der Verstellung der Ventilspindel kommen. Ferner sind bei geometrisch großen Abdichtungen und hohen Druckunterschieden die einzubringenden Vorspannkräfte so hoch, dass diese mit den herkömmlich zur Verfügung stehenden Werkzeugen (z.B. Drehmomentschlüssel) nicht realisiert werden können. Ebenfalls ergibt sich hieraus eine unbekannte reale Verspannung der Stopfbuchspackung.

Eine Aufgabe der vorliegenden Erfindung ist es somit, eine Führungsvorrichtung einer Ventilspindel sowie ein Ventil bereitzustellen, welches zur Verwendung in Dampfturbinen geeignet ist und eine zuverlässige Abdichtung sowie eine zuverlässige Betreibbarkeit sicherstellt. Ferner ist es eine Aufgabe der vorliegenden Erfindung, eine Führungsvorrichtung für eine Ventilspindel sowie ein Ventil bereitzustellen, das eine zuverlässige und sichere Funktion innerhalb einer Dampfturbine sicherstellt.

Die Aufgabe wird durch den Gegenstand des unabhängigen Anspruchs gelöst, welcher auch eine Vorrichtung zum Führen ei ner Ventilspindel gerichtet ist. Ferner wird die Aufgabe durch ein Ventil gelöst, welches die Führungsvorrichtung umfasst. Vorteilhafte Ausführungsformen der vorliegenden Erfindung sind in den abhängigen Ansprüchen beschrieben.

Gemäß einer Ausführungsform der vorliegenden Erfindung ist eine Vorrichtung zum Führen einer Ventilspindel gemäß Anspruch 1 bereitgestellt, welche ein Ventilgehäuseteil (auch als Ventildeckel bezeichnet), ein erstes Hülsenteil mit einer ersten axialen Seite, die an dem Ventilgehäuseteil axial gehalten ist, eine Stopfbuchspackung, die axial angrenzend an einer zweiten axialen Seite des ersten Hülsenteils angeordnet ist, ein zweites Hülsenteil mit einer ersten axialen Seite, die axial an die Stopfbuchspackung angrenzend angeordnet ist; und eine Druckplatte aufweist, die mit dem Ventilgehäuseteil selektiv in einer ersten oder einer zweiten Konfiguration derart verbindbar ist, dass die erste axiale Seite des zweiten Hülsenteils von der zweiten axialen Seite des ersten Hülsenteils um eine vorbestimmte erste Strecke oder eine vorbestimmte zweite Strecke entfernt ist.

Die Vorrichtung zum Führen der Ventilspindel kann ausgebildet sein, die Ventilspindel entlang einer axialen Richtung (welche mit einer longitudinalen Richtung der Ventilspindel übereinstimmen kann) zu führen und kann ferner ausgebildet sein, die Ventilspindel gegen das Ventilgehäuseteil abzudichten. Das Ventilgehäuseteil kann ein Teil eines Ventilgehäuses sein, welches zumindest teilweise das erste Hülsenteil, die Stopfbuchspackung und das zweite Hülsenteil umgibt. Das Ventilgehäuseteil kann ferner zumindest einen Teil der Ventilspindel umgeben, wenn sie in einem Ventil gemäß einer Ausführungsform der vorliegenden Erfindung innerhalb der Führungsvorrichtung angeordnet und geführt ist.

Das erste Hülsenteil und auch das zweite Hülsenteil können jeweils eine zylinderförmige Außenoberfläche und eine zylinderförmige Innenoberfläche aufweisen, wobei innerhalb der inneren Oberfläche die Ventilspindel geführt werden kann. Das erste Hülsenteil und auch das zweite Hülsenteil können aus Metall, z.B. Stahl, Eisen, einer Eisenchromlegierung oder einer anderen Legierung gefertigt sein. Insbesondere kann das erste Hülsenteil und das zweite Hülsenteil eine hinreichende Festigkeit aufweisen, so dass eine Deformation auch bei Pressen der Druckplatte auf das zweite Hülsenteil im Wesentlichen nicht erfolgt, so dass die axiale Ausdehnung der Hülsenteile im Wesentlichen unverändert bleibt. Das erste Hülsenteil kann eine größere axiale Ausdehnung als das zweite Hülsenteil aufweisen. Insbesondere kann die axiale Ausdehnung des ersten Hülsenteils zwischen fünf Mal und zehn Mal der axialen Ausdehnung des zweiten Hülsenteils entsprechen. Andere Werte sind möglich.

Die Stopfbuchspackung kann eine oder mehrere axial übereinander gestapelte gleichgestaltete oder verschieden gestaltete Ringe zum Abdichten umfassen. Diese Abdichtungsringe sind bei axial ausgeübtem Druck deformierbar derart, dass bei axialer Druckanwendung eine radiale Ausdehnung erfolgen kann. Die Stopfbuchspackung kann z.B. ein deformierbares Material umfassen, z.B. Filz. Die Stopfbuchspackung kann eine Abdichtung einer sich axial verschiebbaren Ventilspindel gegen einen Flüssigkeits- oder Dampfdruck bereitstellen. Durch eine axiale Pressung der Stopfbuchspackung kann aufgrund der Deformierbarkeit der Stopfbuchspackung eine radiale Pressung erfolgen, so dass ein Dichtspalt (zwischen einer Außenoberfläche der Ventilspindel und einer Aussparung in dem Ventilgehäuseteil) auf ein den Betriebsbedingungen angepasstes Maß bzw. Minimum eingestellt werden kann. Eine axiale Ausdehnung der Stopfbuchspackung kann kleiner sein als eine axiale Ausdehnung des ersten Hülsenteils und kann größer sein als eine axiale Ausdehnung des zweiten Hülsenteils. Andere Dimensionen sind möglich.

Die Vorrichtung kann für ein Regelventil oder ein Stellventil, insbesondere einer Dampfturbine, eingesetzt werden. Die Stopfbuchspackung kann z.B. Aramid, Graphit, PTFE umfassen und kann z.B. unter Beigabe von diversen Schmier- und Imprägniermitteln geflochten sein. Die Stopfbuchspackung kann auch Gummi, eine Filzpackung und/oder Fett umfassen. Andere Materialien und Herstellungsverfahren sind möglich.

Bei einem gewissen Verschleiß der Stopfbuchspackung (nach insbesondere einer gewissen Betriebsdauer), nachdem die Stopfbuchspackung in der ersten Konfiguration verpresst war, kann es zu einer gewissen Undichtigkeit kommen. Erfindungsgemäß kann dann die Führungsvorrichtung in einer zweiten Konfiguration betrieben werden, in welcher die Stopfbuchspackung stärker axial verpresst wird (d.h. axial um eine größere Strecke zusammengedrückt wird) als in der ersten Konfiguration. Damit kann auch die radiale Verpressung in der zweiten Konfiguration zu einer erhöhten Dichtigkeit verglichen mit der ersten Konfiguration führen.
Die Druckplatte kann aus Metall gefertigt sein und das Ventilgehäuseteil an einer axialen Seite ganz oder teilweise abdecken. Die Druckplatte ist lösbar mit dem Ventilgehäuseteil in der ersten oder in der zweiten Konfiguration verbindbar. Zum Wechseln von einer Konfiguration in die andere Konfiguration muss die Druckplatte lediglich von dem Ventilgehäuseteil gelöst werden, abgenommen werden, einmal gedreht werden und wieder mit dem Ventilgehäuseteil verbunden werden, so dass eine andere axiale Seite der Druckplatte mit dem Ventilgehäuseteil verbunden ist. Ein Entfernen einer Ventilspindel, ein Entfernen des ersten Hülsenteils, der Stopfbuchspackung oder des zweiten Hülsenteils braucht nicht erforderlich sein, um von einer Konfiguration der Führungsvorrichtung in die andere Konfiguration der Führungsvorrichtung zu wechseln.
Die erste Strecke kann z.B. größer sein als die zweite Strecke. Wenn die erste axiale Seite des zweiten Hülsenteils von der zweiten axialen Seite des ersten Hülsenteils um eine vorbestimmte erste Strecke entfernt ist, so kann die axiale Ausdehnung der Stopfbuchspackung die erste Strecke betragen. In der zweiten Konfiguration entspricht bzw. gleicht die axiale Ausdehnung der Stopfbuchspackung der zweiten Strecke, welche insbesondere kleiner sein kann als die erste Strecke. Für ein fabrikneues Ventil kann typischerweise die Führungsvorrichtung in der ersten Konfiguration befindlich sein, um die Stopfbuchspackung weniger stark axial vorzuspannen als in der zweiten Konfiguration, jedoch stark genug, um eine erforderliche Abdichtwirkung zu erzielen. Nach einer gewissen Bebuchspackung erreicht ist, kann auf die zweite Konfiguration umgewechselt werden, um die Stopfbuchspackung um eine größere axiale Strecke zusammenzudrücken, um somit eine Abdichtwirkung trotz eines Verschleißes aufrechtzuerhalten oder sogar zu erhöhen.
Damit kann ein Ventil, welches die Vorrichtung zum Führen einer Ventilspindel aufweist, in einfacher Weise bei auftretenden Undichtigkeiten gewartet werden. Durch Abnehmen der Druckplatte, Umdrehen der Druckplatte und Wiederanbringen der Druckplatte kann eine Wartung bzw. Reparatur schnell durchgeführt werden, ohne eine Fehlbedienung zu riskieren. Keine weiteren Ersatzteile brauchen erforderlich sein. Damit kann ein Ventil und somit auch eine Dampfturbine sicher betrieben werden.

Erfindungsgemäß weist das Ventilgehäuseteil (welches bisweilen auch als Ventildeckel bezeichnet wird) eine Aussparung (insbesondere eine zylinderförmige Aussparung) auf, in der das erste Hülsenteil, die Stopfbuchspackung und das zweite Hülsenteil aufgenommen sind. Die Druckplatte weist auf der ersten und auf der zweiten axialen Seite eine Gehäuseteil-Kontaktfläche auf, welche in der ersten und der zweiten Konfiguration jeweils direkt oder über eine Dichtung mit einer Oberfläche des Ventilgehäuseteils im Kontakt steht.
In einem Ventil ist eine Ventilspindel durch das erste Hülsenteil, durch die Stopfbuchspackung und durch das zweite Hülsenteil geführt und die Stopfbuchspackung stellt eine Dichtung zwischen einer Außenoberfläche der Ventilspindel und der Aussparung des Ventilgehäuses bereit. Durch Verpressen des zweiten Hülsenteils in axialer Richtung mittels der Druckplatte wird die Stopfbuchspackung radial nach außen und auch radial nach innen gepresst und somit kann eine effektive Dichtung erreicht sein.
Die Druckplatte kann mit dem Ventilgehäuseteil in der ersten Konfiguration derart verbindbar sein, dass eine erste axiale Seite der Druckplatte auf eine zweite axiale Seite des zweiten Hülsenteils drückt, so dass die erste axiale Seite des zweiten Hülsenteils um die vorbestimmte erste Strecke von der zweiten axialen Seite des ersten Hülsenteils entfernt ist. Damit kann die axiale Ausdehnung der Stopfbuchspackung auf die erste Strecke eingestellt sein, was einer bestimmten Abdichtung und/oder einer bestimmten Reibung zwischen Ventilspindel und Stopfbuchspackung in axialer Richtung entsprechen kann. Die erste Strecke kann insbesondere in Versuchen, die vorher durchgeführt wurden, derart bestimmt worden sein, dass eine bestimmte Abdichtung und eine bestimmte Reibung erreicht ist.

Die Druckplatte kann mit dem Ventilgehäuseteil in der zweiten Konfiguration derart verbindbar sein, dass eine zweite axiale Seite der Druckplatte auf die zweite axiale Seite des zweiten Hülsenteils drückt, so dass die erste axiale Seite des zweiten Hülsenteils um die vorbestimmte zweite Strecke von der zweiten axialen Seite des ersten Hülsenteils entfernt ist. Somit kann die axiale Ausdehnung der Stopfbuchspackung die zweite Strecke betragen, was einer zweiten gewünschten Abdichtung und/oder einer zweiten gewünschten Reibung entsprechen kann.

Damit kann auf einfache Weise ohne weitere Ersatzteile zu erfordern, eine zweistufige Verspannung der Stopfbuchspackung erreicht werden.

Die Druckplatte kann auf der ersten axialen Seite eine erste Eindrehung (z.B. eine Bohrung oder eine Fräsung) einer ersten (axialen) Tiefe und auf der zweiten axialen Seite eine zweite Eindrehung einer von der ersten Tiefe verschiedenen zweiten Tiefe aufweisen.

Die Eindrehungen können auf einfache Weise realisierbar sein. In der ersten Konfiguration kann ein Grund (bzw. ein Boden) der ersten Eindrehung gegen die zweite axiale Seite des zweiten Hülsenteils drücken und in der zweiten Konfiguration kann ein Grund (bzw. Boden) der zweiten Eindrehung gegen die zweite axiale Seite des zweiten Hülsenteils drücken. Die Eindrehung kann z.B. als eine ringförmige Furche (z.B. mit rechteckigem Querschnitt) oder Stufe ausgebildet sein. Damit kann ferner das erste Hülsenteil radial ausgerichtet werden, was ein Verklemmen der Ventilspindel mit dem zweiten Hülsenteil verhindern kann.
Alternativ kann die Druckplatte auch an den beiden axialen Seiten und Hervorstehungen aufweisen, welche jeweils mit der zweiten axialen Seite des zweiten Hülsenteils in Kontakt stehen. Andere Ausführungen ohne Hervorstehung oder Eindrehung sind möglich.

Erfindungsgemäß weist die Spannplatte auf der ersten axialen Seite und auch auf der zweiten axialen Seite eine Gehäuseteil-Kontaktfläche auf, welche in der ersten Konfiguration und in der zweiten Konfiguration jeweils direkt oder über eine Dichtung (oder über mehrere Dichtungen) mit einer Oberfläche des Gehäuseteils in Kontakt steht. Wenn dieser Kontakt erreicht ist, kann der Abstand zwischen der ersten axialen Seite des zweiten Hülsenteils und der zweiten axialen Seite des ersten Hülsenteils die erste Strecke bzw. die zweite Strecke betragen. Damit kann eine Fehlbedienung ausgeschlossen werden und stattdessen die Stopfbuchspackung immer um eine definierte axiale Strecke zusammengepresst werden bzw. auf eine definierte axiale Ausdehnung in den verschiedenen Konfigurationen gebracht werden.
Die Vorrichtung kann ferner mindestens eine, insbesondere drei oder mehr, Anzugschrauben aufweisen, die angeordnet sind, um die Spannplatte mit dem Ventilgehäuseteil in der ersten Konfiguration und in der zweiten Konfiguration zu verbinden. Die Anzugschraube(n) kann in ein (bzw. mehrere) Innengewinde, welche in dem Ventilgehäuseteil vorgesehen sind, eingeschraubt werden. Insbesondere können dafür in der Druckplatte Durchgangslöcher für die Anzugschraube bzw. die Anzugschrauben vorgesehen sein. Die Anzuglöcher in der Druckplatte und dem Ventilgehäuseteil können insbesondere spiegelsymmetrisch angeordnet sein, so dass nach Drehen der Druckplatte dieselben Innengewinde in dem Ventilgehäuseteil zum Verschrauben der Anzugschraube bzw. -schrauben verwendet werden können, wie vor dem Drehen der Druckplatte. Damit kann eine Herstellung vereinfacht sein und eine einfache Verbindung erreicht werden, welche leicht lösbar ist.

Die Druckplatte kann eine radial nach außen gerichtete Stützoberfläche aufweisen, um einen aus Segmenten (z.B. aus vier Segmenten oder sechs Segmenten) gebildeten Haltering, welcher das Gehäuseteil axial hält (zumindest in einer Richtung), radial zu stützen. Insbesondere kann die Stützoberfläche ein radial Nach-Innen-Fallen des Halteringes verhindern. Zum radialen Stützen des aus Segmenten gebildeten Halteringes braucht somit kein weiteres Element vorgesehen sein, was somit die Führungsvorrichtung und somit auch ein daraus gebildetes Ventil vereinfachen kann.

Gemäß einer Ausführungsform der vorliegenden Erfindung ist ein Ventil bereitgestellt, welches eine Vorrichtung zum Führen einer Ventilspindel gemäß einer der vorangehend beschriebenen Ausführungsformen und eine Ventilspindel aufweist. Dabei ist die Ventilspindel von dem ersten Hülsenteil, der Stoffbuchspackung und dem zweiten Hülsenteil geführt (das erste Hülsenteil, die Stopfbuchspackung und das zweite Hülsenteil umgeben somit die Ventilspindel) und die Ventilspindel liegt mit einem Teil einer radialen Außenoberfläche an einer radialen Innenoberfläche der Stopfbuchspackung an. Durch eine definierte axiale Ausdehnung der Stopfbuchspackung kann eine definierte Abdichtung und auch eine definierte Reibung eingestellt werden.

In der ersten oder in der zweiten Konfiguration kann die Stopfbuchspackung selektiv um eine vorbestimmte erste oder eine vorbestimmte zweite axiale Strecke zusammendrückbar sein, um einen vorbestimmten ersten oder zweiten Abdichtungsgrad zwischen der Ventilspindel und der Aussparung des Ventilgehäuseteils zu erreichen, und/oder um einen ersten oder zweiten Reibungsgrad der Ventilspindel gegen die Stopfbuchspackung einzustellen. Damit kann ein zuverlässiger Betrieb des Ventils sichergestellt werden.

Bei vorgegebenem ersten oder zweiten Abdichtungsgrad können eine jeweils dafür erforderliche axiale Strecke einer Kompression bzw. einer Ausdehnung der Stopfbuchspackung und/oder der jeweilige Reibungsgrad vorher ermittelt worden sein.

Das Ventil kann ferner einen Stellmotor aufweisen, welcher zum axialen Verschieben der Ventilspindel ausgebildet ist und dimensioniert ist, die Reibung der Ventilspindel in der ersten und zweiten Konfiguration zu überwinden. Somit kann ein Verklemmen der Ventilspindel aufgrund eines möglicherweise im Stand der Technik vorkommenden falschen Verspannens vermieden werden.
Fig.1 illustriert schematisch in einer Längsschnittsansicht ein Ventil gemäß einer Ausführungsform der vorliegenden Erfindung mit einer Vorrichtung zum Führen einer Ventilspindel gemäß einer Ausführungsform der vorliegenden Erfindung;
Fig. 2 illustriert schematisch in einer Längsschnittsansicht einen Teil einer Vorrichtung zum Führen einer Ventilspindel gemäß einer Ausführungsform der vorliegenden Erfindung in einer ersten Konfiguration; und
Fig. 3 illustriert schematisch in einer Längsschnittsansicht einen Teil einer Vorrichtung zum Führen einer Ventilspindel gemäß einer Ausführungsform der vorliegenden Erfindung beim Wechseln in eine zweite Konfiguration.

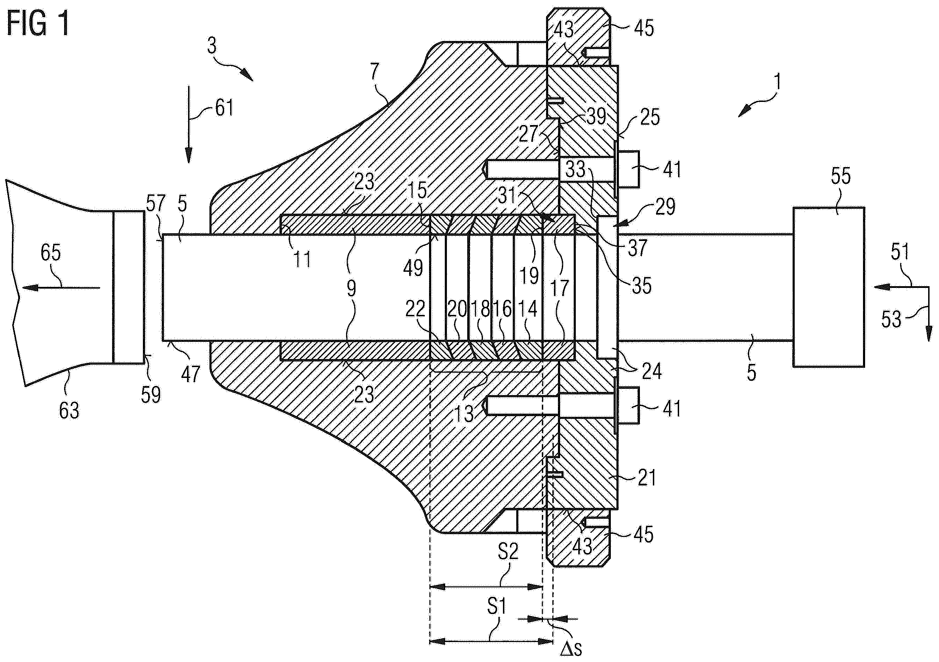

Das in **Fig. 1** in einer schematischen Querschnittsansicht illustrierte Ventil 1 weist eine Vorrichtung 3 zum Führen einer Ventilspindel gemäß einer Ausführungsform der vorliegenden Erfindung auf, sowie eine Ventilspindel 5, welche von der Führungsvorrichtung 3 geführt ist. Die Vorrichtung 3 zum Führen einer Ventilspindel 5 weist ein Ventilgehäuseteil 7, ein erstes Hülsenteil 9 mit einer ersten axialen Seite 11, die an dem Ventilgehäuseteil 7 axial gehalten ist, und eine Stopfbuchspackung 13 auf, die axial angrenzend an einer zweiten axialen Seite 15 des ersten Hülsenteils 9 angeordnet ist. Ferner weist die Vorrichtung 3 ein zweites Hülsenteil 17 mit einer ersten axialen Seite 19 auf, die axial an die Stopfbuchspackung 13 angrenzend angeordnet ist. Ferner umfasst die Vorrichtung 3 eine Druckplatte 21, die mit dem Ventilgehäuseteil 7 selektiv in einer ersten oder in einer zweiten Konfiguration derart verbindbar ist, dass die erste axiale Seite 19 des zweiten Hülsenteils 17 von der zweiten axialen Seite 15 des ersten Hülsenteils 9 um eine vorbestimmte erste Strecke s1 oder eine vorbestimmte zweite Strecke s2 entfernt ist.

Das Ventilgehäuseteil 7 weist ferner eine Aussparung 23 auf, in der das erste Hülsenteil 9, die Stopfbuchspackung 13 und das zweite Hülsenteil 17 aufgenommen sind. Die Druckplatte 21 weist eine erste axiale Seite bzw. Oberfläche 25 und eine zweite axiale Seite bzw. Oberfläche 27 auf. In der ersten Konfiguration drückt die erste axiale Oberfläche 25 auf das zweite Hülsenteil 17 und in der zweiten Konfiguration drückt die zweite axiale Oberfläche 27 auf das zweite Hülsenteil 17.

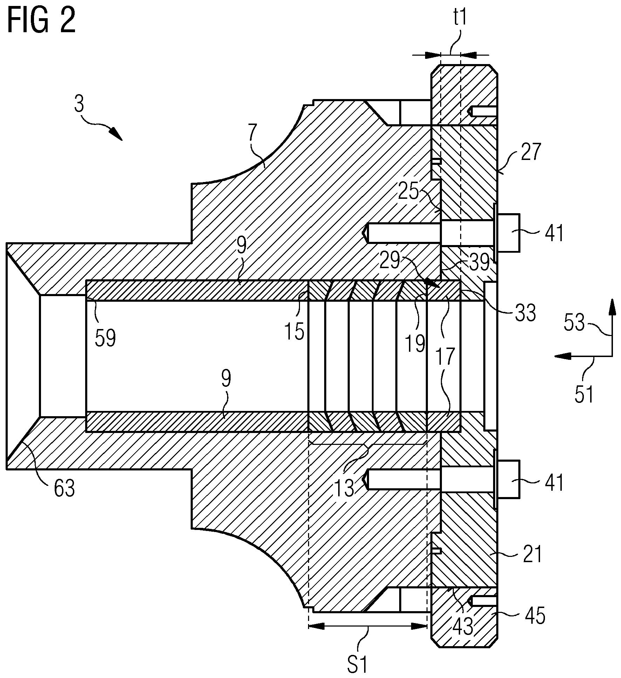

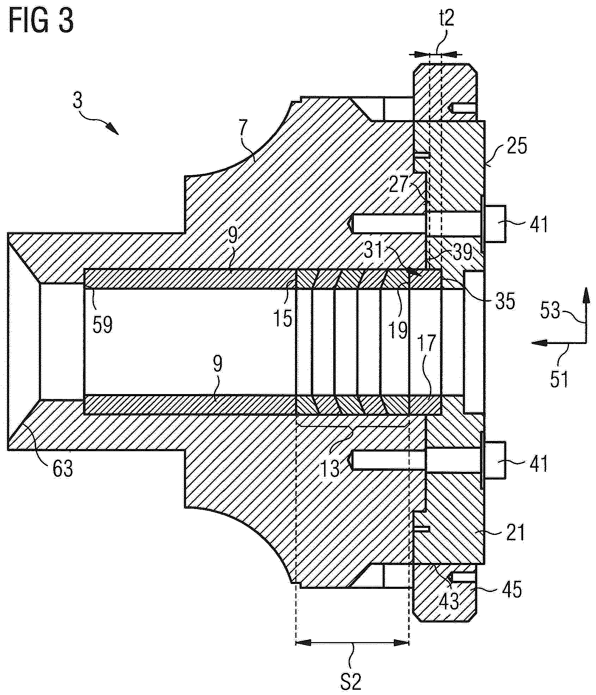

Auf der ersten axialen Oberfläche 25 weist die Druckplatte 21 eine erste Eindrehung 29 auf, welche eine erste Tiefe t1 aufweist, wie in **Fig. 2** illustriert ist. Auf der zweiten axialen Seite 27 weist die Druckplatte 21 eine zweite Eindrehung 31 auf, welche eine zweite Tiefe t2 aufweist, wie in **Fig. 3** illustriert ist. Ein Grund 33 der ersten Eindrehung 29 drückt in der ersten Konfiguration gegen die zweite axiale Seite 35 des zweiten Hülsenteils 17. Ein Grund 37 der zweiten Eindrehung 31 drückt in der zweiten Konfiguration gegen die zweite axiale Seite 35 des zweiten Hülsenteils 17.

Eine Gehäuseteil-Kontaktfläche 25, 27 auf der ersten bzw. zweiten axialen Seite 25, 27 der Druckplatte 21 ist in der ersten bzw. der zweiten Konfiguration jeweils direkt oder über eine Dichtung mit einer Oberfläche 39 des Ventilgehäuseteils 7 in Kontakt.

In der in Fig. 1 illustrierten Situation wurde gerade ein Wechsel von einer ersten Konfiguration in eine zweite Konfiguration durchgeführt, wobei die Druckplatte 21 nunmehr mittels Schrauben 41 mit dem Ventilgehäuseteil 7 verbunden wird und zwar so weit, bis die Oberfläche 39 des Ventilgehäuseteils 7 in direkten Kontakt mit der Gehäuseteil-Kontaktfläche 27 der zweiten axialen Seite der Druckplatte in Kontakt steht. Dazu wird die Druckplatte noch um die Strecke Δs nach links durch Anziehen der Schrauben verschoben. Δs ist die Differenz aus der ersten Strecke s1 und der zweiten Strecke s2.

Die Druckplatte 21 weist ferner eine radial nach außen gerichtete Stützoberfläche 43 auf, um einen aus Segmenten gebildeten Haltering 45, welcher das Gehäuseteil 7 axial hält, radial zu stützen.

Die Spindel 5 weist eine Radial-Außenoberfläche 47 auf, welche an einer Radial-Innenoberfläche 49 der Stopfbuchspackung 13 anliegt. Die Stopfbuchspackung 13 ist in den Fign. 1, 2 und 3 der illustrierten Ausführungsformen aus fünf deformierbaren Ringen 14, 16, 18, 20, 22 gebildet. Andere Anordnungen und Konfigurationen sind möglich. Die Stopfbuchspackung 13 ist aus einem deformierbaren Material gefertigt und ist ausgebildet, die radiale Ausdehnung zu ändern, falls eine Presskraft in einer axialen Richtung 51 ausgeübt wird. Bezugszeichen 53 bezeichnet eine radiale Richtung.

Gemäß Ausführungsform der vorliegenden Erfindung wird die Vorspannung der Stopfbuchspackung 13 nicht wie im Stand der Technik vorgenommen durch die Definition einer notwendigen Axialkraft erzielt, sondern die zur Abdichtung benötigte Axialkraft wird vorher ermittelt, die damit direkt verbundene Setzung der Packung wird ermittelt und am Bauteil realisiert. Durch das Einbringen der Vorspannkraft durch eine reine axiale Bewegung der Druckhülse (insbesondere des zweiten Hülsenteils 17) (die gleichzeitig eine Funktion als zweite Führungsbuchse der Ventilspindel 5 erfüllt) kann eine Beschädigung des ersten Packungsringes 14 der Packungsringe 14, 16, 18, 20, 22 der Stopfbuchspackung 13 durch die Drehbewegung der Stopfbuchsbrille, wie es aus dem Stand der Technik bekannt ist, reduziert oder gar ausgeschlossen werden.

Mit der Einbringung von zwei verschiedenen Eindrehungen, d.h. der ersten Eindrehung 29 einer ersten Tiefe t1 und einer zweiten Eindrehung 31 mit einer zweiten Tiefe t2 kann eine Verwendung der Druckplatte 21 (auch als Spannscheibe bezeichnet) für zwei verschiedene Vorspannungen (z.B. Standardeinstellung und Nachspanneinstellung) erfolgen. Eine Fehlbedienung bei der Montage durch zu schwaches Vorspannen kann somit ausgeschlossen werden. Die Druckplatte bzw. Spannscheibe 21 kann ferner die Funktion eines Halteringes für den Segmentring 45 erfüllen.

Die Ventilspindel 5 kann über einen Stellmechanismus 55 in der axialen Richtung 51 verschoben bzw. verstellt werden. Eine axiale Endfläche 57 der Spindel 5 kann eine Öffnung 59 verschließen, wenn die axiale Endfläche 57 entsprechend (in die Öffnung 59 hinein) verschoben wird. Damit kann das Ventil 1 verschlossen werden, um einen Durchtritt von Dampf 61 durch die Öffnung 59 zu verhindern. Bei geöffnetem Ventil 1 kann der Dampf 61 durch die Öffnung 59 durch einen Diffusor 63 als durchgetretener Dampf 65 passieren.

**Fig. 2** illustriert im Längsschnitt eine Vorrichtung 3 zum Führen einer Ventilspindel in der ersten Konfiguration. In der ersten Konfiguration ist die erste axiale Außenoberfläche 25 bzw. axiale Seite 25 mit der axialen Außenoberfläche 39 des Ventilgehäuseteils 7 in Kontakt. Das zweite Hülsenteil 9 wird durch den Grund 33 der ersten Eindrehung 29 axial gehalten bzw. zusammengepresst, so dass die erste axiale Seite 19 des zweiten Hülsenteils 17 um eine erste Strecke s1 von der zweiten axialen Seite 15 des ersten Hülsenteils 19 entfernt ist.

Die zweite Konfiguration wird erreicht, indem die Druckplatte 21 abgenommen und gedreht wird (durch Drehen um 180° der Druckplatte 21 um eine in Fig. 2 in der Zeichenebene liegende Rotationsachse) und indem die Druckplatte 21 in der verdrehten Orientierung mit dem Ventilgehäuseteil 7 mittels der Schrauben 41 verschraubt wird (siehe **Fig. 3**), so dass die zweite axiale Oberfläche 27 der Druckplatte 21 mit der axialen Außenoberfläche 39 des Ventilgehäuseteils 7 in Kontakt steht (möglicherweise über ein oder mehrere Dichtungen). Sind diese beiden Oberflächen 39 und 27 in direktem Kontakt miteinander, so beträgt in der zweiten Konfiguration der Abstand zwischen der ersten axialen Seite 19 des zweiten Hülsenteils 17 und der zweiten axialen Seite 15 des ersten Hülsenteils die zweite Strecke s2.

Die einzubringende Vorspannung in die Stopfbuchspackung 13 wird nicht wie aus dem Stand der Technik bekannt, über eine notwendige Kraft auf die Stopfbuchsbrille definiert, sondern die optimale und maximal zulässige Verspannung kann vorher in Versuchen ermittelt werden und kann dann über die notwendige Verdichtung der Stopfbuchspackung gewährleistet sein.

Durch das Anziehen der neuartigen Stopfbuchsbrille auf "Block" kann eine Fehlbedienung (zu schwaches bzw. zu starkes Verspannen) ausgeschlossen werden. Die Schrauben 41 werden somit sowohl in der ersten Konfiguration als auch in der zweiten Konfiguration solange angezogen, bis die Oberflächen 25 und 39 (in der ersten Konfiguration) bzw. die Oberflächen 27 und 39 (in der zweiten Konfiguration) in direkten Kontakt miteinander stehen, so dass ein weiteres Anziehen der Schrauben unmöglich wird. Durch die Einbringung der Kraft mittels mehrerer (z.B. drei) Anzugschrauben 41 können diese Anzugsschrauben 41 relativ klein dimensioniert werden und mittels üblicher Werkzeuge angezogen werden. Ein Spezialwerkzeug zum Anziehen einer Stopfbuchsbrille kann damit entfallen.

Die axial bewegliche Hülse (insbesondere der zweite Hülsenteil 17 zur Verspannung der Stopfbuchspackung 13) kann z.B. aus Stellit gefertigt sein (oder aus einem anderen Material, insbesondere aus einem Metall) und kann somit gleichzeitig als zusätzliche Führungsbuchse für die Ventilspindel 5 fungieren. Durch die Führung der Ventilspindel 5 vor und hinter der Stopfbuchspackung 13 können die Amplituden der Spindelschwingungen (z.B. angeregt durch Dampfströmung) reduziert werden und ein Verschließen oder eine Beschädigung der Stopfbuchspackung kann vermieden bzw. reduziert werden.

Durch die zwei verschiedenen Eindrehungen 29, 31 in der Druckplatte (bzw. Spannscheibe) 21, kann mit der Tiefeneindrehung 29 (geringe Verdichtung der Stopfbuchspackung 13) die für den Betrieb notwendige Verspannung realisiert werden. Durch Drehen der Spannscheibe kann die flache zweite Eindrehung 31 auf die Buchse/Hülse gesteckt werden und die Setzung der Stopfbuchspackung kann um die Differenz Δs der Eindrehungstiefen t1 und t2 erhöht werden (höhere Verdichtung der Stopfbuchspackung 13). Somit kann bei einem notwendigen Nachspannen der Stopfbuchspackung, infolge Undichtigkeiten, ohne zusätzliche Bauteile die Vorspannung erhöht werden. Ein zu starkes Verspannen kann dabei ausgeschlossen werden, da die erreichte Setzung der Packung und damit verbundene Erhöhung der Reibkräfte zuvor in Tests ermittelt werden kann bzw. ermittelt wurde und die Stellkraftberechnung einfließen kann (unter Berücksichtigung einer Sicherheitsreserve) .

Weiterhin kann die Nutzung einer derartigen Spannscheibe die Möglichkeit der Aufnahme weiterer Abdichtungen 24 (beispielsweise Dichtschnur zum Gehäuse und zur Ventilspindel) zulassen, wodurch ein zusätzlicher Schutz der eigentlichen Stopfbuchspackung 13 über das Verhindern von Kontakt mit Sauerstoff erzielt werden kann und sich die Lebensdauer der Packung erhöhen kann.

Einsparungen ergeben sich durch die einfache Geometrie der Verspannung (herkömmliche Stopfbuchsbrille kann relativ aufwendig sein und Passungen und ein Gewinde erfordern). Ferner kann ein Plasmanitrieren des Gewindes wegfallen, wobei eine Wirkung um 500°C fraglich ist. Damit ist ein geringer Zerspanungsaufwand am Ventildeckel und eine einfache Montage ermöglicht.

Über die Außenkontur 43 der Spannscheibe 21 kann die Sicherung des Segmentringes ("Brettschneider-Verschluss") 45 erfolgen und der bisher benötigte separate Haltering kann entfallen.

## Patentansprüche

1. Vorrichtung (3) zum Führen einer Ventilspindel (5), aufweisend:
ein Ventilgehäuseteil (7);
ein erstes Hülsenteil (9) mit einer ersten axialen Seite (11), die an dem Ventilgehäuseteil (7) axial gehalten ist;
eine Stopfbuchspackung (13), die axial angrenzend an einer zweiten axialen Seite (15) des ersten Hülsenteils (9) angeordnet ist;
ein zweites Hülsenteil (17) mit einer ersten axialen Seite (19), die axial an die Stopfbuchspackung (13) angrenzend angeordnet ist; und
eine Druckplatte (21), die mit dem Ventilgehäuseteil (7) selektiv in einer ersten oder einer zweiten Konfiguration derart verbindbar ist, dass die erste axiale Seite (19) des zweiten Hülsenteils (17) von der zweiten axialen Seite (15) des ersten Hülsenteils (9) um eine vorbestimmte erste Strecke (s1) oder eine vorbestimmte zweite Strecke (s2) entfernt ist,
wobei das Ventilgehäuseteil (7) eine Aussparung (23) aufweist, in der das erste Hülsenteil (9), die Stopfbuchspackung (13) und das zweite Hülsenteil (17) aufgenommen sind,
**dadurch gekennzeichnet, dass**
die Druckplatte auf der ersten und auf der zweiten axialen Seite eine Gehäuseteil-Kontaktfläche (25, 27) aufweist, welche in der ersten und der zweiten Konfiguration jeweils direkt oder über eine Dichtung mit einer Oberfläche (39) des Ventilgehäuseteils (7) im Kontakt steht.

2. Vorrichtung gemäß Anspruch 1, wobei die Druckplatte (21) mit dem Ventilgehäuseteil in der ersten Konfiguration derart verbindbar ist, dass eine erste axiale Oberfläche (25) der Druckplatte (21) auf eine zweite axiale Seite (35) des zweiten Hülsenteils (17) drückt, so dass die erste axiale Seite (19) des zweiten Hülsenteils (17) um die vorbestimmte erste Strecke (s1) von der zweiten axialen Seite (15) des ersten Hülsenteils (9) entfernt ist,
wobei die Druckplatte mit dem Ventilgehäuseteil in der zweiten Konfiguration derart verbindbar ist, dass eine zweite axiale Oberfläche (27) der Druckplatte (21) auf die zweite axiale Seite (35) des zweiten Hülsenteils (17) drückt, so dass die erste axiale Seite (19) des zweiten Hülsenteils (17) um die vorbestimmte zweite Strecke (s2) von der zweiten axialen Seite (15) des ersten Hülsenteils (9) entfernt ist.

3. Vorrichtung gemäß der Ansprüche 1 oder 2, wobei die Druckplatte (21) auf der ersten axialen Seite eine erste Eindrehung (29) einer ersten Tiefe (t1) und auf der zweiten axialen Seite eine zweite Eindrehung (31) einer von der ersten Tiefe verschiedenen zweiten Tiefe (t2) aufweist,
wobei in der ersten Konfiguration ein Grund (33) der ersten Eindrehung (29) gegen die zweite axiale Seite (35) des zweiten Hülsenteils (17) drückt und
wobei in der zweiten Konfiguration ein Grund (37) der zweiten Eindrehung (31) gegen die zweite axiale Seite (35) des zweiten Hülsenteils (17) drückt.

4. Vorrichtung gemäß einem der Ansprüche 1 bis 3, ferner aufweisend:
mindestens eine, insbesondere drei oder mehr, Anzugschraube (41), die angeordnet ist, um die Spannplatte (21) mit dem Ventilgehäuseteil (7) in der ersten Konfiguration und in der zweiten Konfiguration zu verbinden.

5. Vorrichtung gemäß einem der Ansprüche 1 bis 4, wobei die Druckplatte eine radial nach außen gerichtete Stützoberfläche (43) aufweist, um einen aus Segmenten gebildeten Haltering (45), welcher das Gehäuseteil axial hält, radial zu stützen.

6. Ventil (1), aufweisend:
eine Vorrichtung (3) zum Führen einer Ventilspindel (5) gemäß einem der vorangehenden Ansprüche; und
eine Ventilspindel (5), welche von dem ersten Hülsenteil (9), der Stopfbuchspackung (13) und dem zweiten Hülsenteil (17) geführt ist und mit einem Teil einer Radialaußenoberfläche (47) an einer Radialinnenoberfläche (49) der Stopfbuchspackung (13) anliegt.

7. Ventil gemäß Anspruch 6, wobei in der ersten oder der zweiten Konfiguration die Stopfbuchspackung (13) selektiv um eine vorbestimmte erste oder eine vorbestimmte zweite axiale Strecke zusammendrückbar ist,
um einen vorbestimmten ersten oder zweiten Abdichtungsgrad zwischen der Ventilspindel und der Aussparung des Ventilgehäuseteils zu erreichen,
und/oder um einen ersten oder zweiten Reibungsgrad der Ventilspindel gegen die Stopfbuchspackung einzustellen.

8. Ventil gemäß Anspruch 6 oder 7, wobei bei vorgegebenem ersten oder zweiten Abdichtungsgrad eine jeweils dafür erforderliche axiale Strecke einer Kompression der Stopfbuchspackung (13) und/oder der jeweilige Reibungsgrad vorher ermittelt wurde,
wobei das Ventil insbesondere ferner aufweist:
einen Stellmotor (55), welcher zum axialen Verschieben der Ventilspindel (5) ausgebildet ist und dimensioniert ist, die Reibung der Ventilspindel in der ersten und zweiten Konfiguration zu überwinden.

## Claims

1. Apparatus (3) for guiding a valve spindle (5), comprising:
a valve housing part (7);
a first sleeve part (9) with a first axial side (11) which is held axially on the valve housing part (7);
a stuffing box (13) which is arranged so as to axially adjoin a second axial side (15) of the first sleeve part (9) ;
a second sleeve part (17) with a first axial side (19) which is arranged so as to axially adjoin the stuffing box (13) ;
a pressure plate (21) which can be connected selectively to the first valve housing part (7) in a first or a second configuration in such a way that the first axial side (19) of the second sleeve part (17) is spaced apart from the second axial side (15) of the first sleeve part (9) by a predefined first distance (s1) or a predefined second distance (s2),
the valve housing part (7) having a cut-out (23), in which the first sleeve part (9), the stuffing box (13) and the second sleeve part (17) are received,
**characterized in that**
the pressure plate has a housing part contact face (25, 27) on the first and on the second axial side, which housing part contact face (25, 27) is in contact in the first and the second configuration in each case directly or via a seal with a surface (39) of the valve housing part (7) .

2. Apparatus according to Claim 1, it being possible for the pressure plate (21) to be connected to the valve housing part in the first configuration in such a way that a first axial surface (25) of the pressure plate (21) presses on a second axial side (35) of the second sleeve part (17), with the result that a first axial side (19) of the second sleeve part (17) is spaced apart from the second axial side (15) of the first sleeve part (9) by the predefined first distance (s1),
it being possible for the pressure plate to be connected to the valve housing part in the second configuration in such a way that a second axial surface (27) of the pressure plate (21) presses on the second axial side (35) of the second sleeve part (17), with the result that the first axial side (19) of the second sleeve part (17) is spaced apart from the second axial side (15) of the first sleeve part (9) by the predefined second distance (s2).

3. Apparatus according to either of Claims 1 and 2, the pressure plate (21) having a first turned groove (29) of a first depth (t1) on the first axial side and a second turned groove (31) of a second depth (t2) which is different from the first depth on the second axial side,
a bottom (33) of the first turned groove (29) pressing against the second axial side (35) of the second sleeve part (17) in the first configuration, and
a bottom (37) of the second turned groove (31) pressing against the second axial side (35) of the second sleeve part (17) in the second configuration.

4. Apparatus according to one of Claims 1 to 3, comprising, furthermore:
at least one, in particular three or more, tightening screw/screws (41) which are/is arranged so as to connect the clamping plate (21) to the valve housing part (7) in the first configuration and in the second configuration.

5. Apparatus according to one of Claims 1 to 4, the pressure plate having a radially outwardly directed supporting surface (43), in order to radially support a holding ring (45) which is formed from segments and holds the housing part axially.

6. Valve (1), comprising:
an apparatus (3) for guiding a valve spindle (5) according to one of the preceding claims; and
a valve spindle (5) which is guided by the first sleeve part (9), the stuffing box (13) and the second sleeve part (17) and bears with a part of a radial outer surface (47) against a radial inner surface (49) of the stuffing box (13) .

7. Valve according to Claim 6, it being possible for the stuffing box (13) to be compressed selectively by a predefined first or a predefined second axial distance in the first or the second configuration,
in order to achieve a predefined first or second degree of sealing between the valve spindle and the cut-out of the valve housing part,
and/or in order to set a first or second degree of friction of the valve spindle against the stuffing box.

8. Valve according to Claim 6 or 7, an axial distance which is required in each case for this purpose of a compression of the stuffing box (13) and/or the respective degree of friction having been determined previously in the case of a predetermined first or second degree of sealing,
the valve comprising, furthermore, in particular:
an actuating motor (55) which is configured to axially displace the valve spindle (5) and is dimensioned to overcome the friction of the valve spindle in the first and second configuration.

## Revendications

1. Dispositif (3) de guidage pour une tige de soupape (5), présentant :
une partie de cage de soupape (7) ;
une première partie de manchon (9) comprenant un premier côté axial (11) qui est maintenu axialement sur la partie de cage de soupape (7) ;
une garniture de presse-étoupe (13) qui est disposée délimitée axialement contre un deuxième côté axial (15) de la première partie de manchon (9),
une deuxième partie de manchon (17) avec un premier côté axial (19) qui est disposé délimité axialement contre la garniture de presse-étoupe (13) ; et
une plaque de pression (21) qui peut être reliée à la partie de cage de soupape (7) de manière sélective dans une première ou une deuxième configuration de telle façon que le premier côté axial (19) de la deuxième partie de manchon (17) est éloigné du deuxième côté axial (15) de la première partie de manchon (9) d'une première distance prédéfinie (s1) ou d'une deuxième distance prédéfinie (s2),
dans lequel la partie de cage de soupape (7) présente un évidement (23) dans lequel la première partie de manchon (9), la garniture de presse-étoupe (13) et la deuxième partie de manchon (17) sont reçues,
**caractérisé en ce que**
la plaque de pression présente une surface de contact de partie de cage (25, 27) sur les premier et deuxième côtés axiaux, laquelle est en contact direct ou par le biais d'un joint avec une surface (39) de la partie de cage de soupape (7) dans la première et la deuxième configuration.

2. Dispositif selon la revendication 1, dans lequel la plaque de pression (21), dans la première configuration, peut être reliée à la partie de cage de soupape de telle façon qu'une première surface axiale (25) de la plaque de pression (21) appuie sur une deuxième face axiale (35) de la deuxième partie de manchon (17), de sorte que le premier côté axial (19) de la deuxième partie de manchon (17) est éloigné de la première distance prédéfinie (s1) par rapport au deuxième côté axial (15) de la première partie de manchon (9),
dans lequel la plaque de pression, dans la deuxième configuration, peut être reliée à la partie de cage de soupape de telle façon qu'une deuxième surface axiale (27) de la plaque de pression (21) appuie sur le deuxième côté axial (35) de la deuxième partie de manchon (17), de sorte que le premier côté axial (19) de la deuxième partie de manchon (17) est éloigné de la deuxième distance prédéfinie (s2) par rapport au deuxième côté axial (15) de la première partie de manchon (9).

3. Dispositif selon la revendication 1 ou 2, dans lequel la plaque de pression (21) présente sur le premier côté axial, une première gorge tournée (29) d'une première profondeur (t1) et sur le deuxième côté axial, une deuxième gorge tournée (31) d'une deuxième profondeur (t2) différente de la première profondeur,
dans lequel dans la première configuration, un fond (33) de la première gorge tournée (29) appuie contre le deuxième côté axial (35) de la deuxième partie de manchon (17) et
dans lequel dans la deuxième configuration, un fond (37) de la deuxième gorge tournée (31) appuie contre le deuxième côté axial (35) de la deuxième partie de manchon (17).

4. Dispositif selon l'une des revendications 1 à 3, présentant en outre :
au moins un, en particulier trois ou plus, boulon(s) à serrer (41) qui est/sont disposé(s) pour relier la plaque de serrage (21) à la partie de cage de soupape (7) dans la première configuration et dans la deuxième configuration.

5. Dispositif selon l'une des revendications 1 à 4, dans lequel la plaque de pression présente une surface d'appui (43) dirigée radialement vers l'extérieur pour appuyer radialement une bague de fixation (45) formée de segments qui maintient axialement la partie de cage.

6. Soupape (1), présentant :
un dispositif (3) de guidage pour une tige de soupape (5) selon l'une des revendications précédentes ; et
une tige de soupape (5) qui est dirigée par la première partie de manchon (9), la garniture de presse-étoupe (13) et la deuxième partie de manchon (17) et repose avec une partie d'une surface extérieure radiale (47), sur une surface intérieure radiale (49) de la garniture de presse-étoupe (13).

7. Soupape selon la revendication 6, dans laquelle dans la première ou la deuxième configuration, la garniture de presse-étoupe (13) peut être comprimée de manière sélective sur une première distance axiale prédéfinie ou une deuxième distance axiale prédéfinie,
pour atteindre un premier ou un deuxième degré d'étanchéité prédéfini entre la tige de soupape et l'évidement de la partie de cage de soupape,
et/ou pour régler un premier ou un deuxième degré de frottement de la tige de soupape contre la garniture de presse-étoupe.

8. Soupape selon la revendication 6 ou 7, dans laquelle dans le premier ou deuxième degré d'étanchéité prédéfini, une distance axiale respective nécessaire d'une compression de la garniture de presse-étoupe (13) et/ou le degré de frottement respectif a/ont été déterminé(e)(s) au préalable,
dans lequel la soupape présente en outre :
un servomoteur (55) qui est conçu pour déplacer la tige de soupape (5) axialement et dimensionné pour surmonter le frottement de la tige de soupape dans les première et deuxième configurations.
